# EUROPEAN PATENT APPLICATION

(11) **EP 4 636 699 A1**
(43) Date of publication of application: **22.10.2025**
(21) Application number: 24170812.2
(22) Date of filing: 17.04.2024
(51) Int. Cl.: G06T 11/00, G06T 7/33

(54) **NON-LINEAR BRAIN DEFORMATION**

(71) Applicant: Koninklijke Philips N.V., 5656 AG Eindhoven (NL)
(72) Inventor: WENZEL, Fabian, Eindhoven (NL); ORASANU, Eliza Teodora, Eindhoven (NL)
(74) Representative: Philips Intellectual Property & Standards

(57) **Abstract**

Proposed concepts thus aim to provide schemes, solutions, concept, designs, methods and systems pertaining to predicting a registration between two medical images of a subject's brain. In particular, embodiments aim to provide a method for predicting a registration between two medical images of a subject's brain. This can be achieved by obtaining a segmentation of a first medical image to identify an anatomical structure and then, based on this, determining a dense deformation field from the first medical image to the second medical image. In other words, it is proposed that by determining a dense deformation field between a first medical image of a subject's brain and a second medical image in which a subject's brain is non-linearly deformed compared to the brain in the first medical image (i.e., has undergone brain-shift), a registration between the two images can essentially be predicted.

## Description

### FIELD OF THE INVENTION

This invention relates to the field of medical image registration, and in particular, to the field of registration between medical images of a subject's brain.

### BACKGROUND OF THE INVENTION

Neurosurgical interventions require accurate planning to reach a dedicated target position in the brain without interfering with areas of risk. Assessment of pathologies and target locations for interventions is usually done via neuroimaging, e.g., by inspection of anatomy and pathologies using magnetic resonance images, due to their ability to best show tissue contrast in the brain.

Anatomical segmentations of pre-operative magnetic resonance (MR) images cannot typically be effectively registered to intra-operative CBCT/CT images, since opening the skull normally results in a 'brain-shift' describing non-linear deformations of the brain. In most hospitals, MRI is not available for intra-operative neuroimaging. Therefore, there is a need for effectively merging information from pre-operative MR images and intra-operative CBCT/CT images during procedures, for example, to correct an interventional trajectory.

### SUMMARY OF THE INVENTION

The invention is defined by the claims.

According to examples in accordance with an aspect of the invention, there is provided a computer-implemented method for predicting a registration between two medical images of a subject's brain.

The computer-implemented method comprises: obtaining a first medical image of a subject's brain; obtaining a model-based segmentation of the first medical image, wherein the segmentation identifies at least one anatomical structure in the first medical image; obtaining a second medical image of a subject's brain in which the subject's brain is non-linearly deformed compared to the subject's brain in the first medical image; and determining a dense deformation field from the first medical image to the second medical image based on the at least one anatomical structure in the first medical image, the first medical image, and the second medical image.

Proposed concepts thus aim to provide schemes, solutions, concepts, designs, methods and systems pertaining to predicting a registration between two medical images of a subject's brain. In particular, embodiments aim to provide a method for predicting a registration between two medical images of a subject's brain by obtaining a segmentation of a first medical image to identify an anatomical structure and then, based on this, determining a dense deformation field from the first medical image to the second medical image.

In other words, it is proposed that by determining a dense deformation field between a first medical image of a subject's brain and a second medical image in which a subject's brain is non-linearly deformed compared to the brain in the first medical image (i.e., has undergone brain-shift), a registration between the two images can essentially be predicted. The dense deformation field can be determined based on an anatomical structure identified in the first medical image (via a model-based segmentation) as well as the second medical image, such that the dense deformation field can essentially deform the anatomical structure in the first medical image to match the second medical image (e.g., the same anatomical structure in the second medical image).

By obtaining a model-based segmentation of the first medical image of a subject's brain, an anatomical structure can be identified in the first medical image, and then using this, a dense deformation field from the first medical image to the second medical image (in which the same subject's brain is non-linearly deformed compared to in the first medical image) can be determined. This facilitates a registration to be predicted between the two medical images of the subject's brain. For example, the skull of a subject would not undergo non-linear deformation (brain-shift) and so identifying at least one anatomical structure, such as the skull or the brain, allows a more useful dense deformation field to be determined (e.g., by not deforming the skull).

This concept can also be utilized to synthesize a medical image of a subject's brain in which the subject's brain is deformed compared to the subject's brain in a first medical image, i.e., has undergone brain-shift. Since datasets with brain-shift are rare, it is useful to be able to simulate/synthesize pairs of medical images in which a subject's brain is non-linearly deformed compared to the subject's brain in the first medical image (e.g., a real medical image of the subject's brain). These can then be used, for example, to train machine-learning models in matters related to brain-shift.

Ultimately, an improved computer-implemented method for predicting a registration between two medical images of a subject's brain (e.g., that can account for brain-shift) is provided.

In some embodiments, the computer-implemented method may further comprise: performing a model-based segmentation on the second medical image to identify at least one anatomical structure in the second medical image; and wherein determining the dense deformation field is further based on the at least one anatomical structure in the second medical image. This may facilitate a more effective and/or efficient determination of the dense deformation field, e.g., for deforming the first medical image such that the at least one anatomical structure matches the at least one anatomical structure in the second medical image.

In some embodiments, the determined dense deformation field may be for matching a surface of the at least one anatomical structure in the first medical image to a surface of the at least one anatomical structure in the second medical image. In this way, a registration between the two medical images may be more effectively and/or efficiently predicted.

In some embodiments, the computer-implemented method may further comprise: determining at least one corresponding landmark in each of the first and second medical images respectively based on the determined at least one anatomical structure in each of the first and second medical images respectively; and wherein determining a dense deformation field is based on the determined at least one corresponding landmark in the first and second medical images respectively. The use of landmarks in the anatomical structures in the first and second medical images may respectively provide an effective and/or efficient way to determine a dense deformation field.

In some embodiments, both the first medical image and the second medical image may each include at least a portion of the subject's skull, and wherein the determined dense deformation field may be for matching the position of the at least one corresponding landmark relative to the subject's skull in the first medical image to the position of the at least one corresponding landmark relative to the subject's skull in the second medical image. This may facilitate an effective and/or efficient way to determine a dense deformation field.

In some embodiments, the at least one anatomical structure in the first medical image may comprise at least a portion of the subject's brain. This may ensure the determination of a more effective dense deformation field for compensation of brain-shift.

In some embodiments, the computer-implemented method may further comprise capturing the second medical image during a neurological surgical procedure which causes non-linear deformation of the subject's brain.

In some embodiments, the first medical image may comprise a magnetic resonance image and the second medical image may comprise a computed tomography or a cone beam computed tomography image. These are typical pairs of pre-operative and intra-operative medical image during neurosurgery, for example.

In some embodiments, the first medical image may comprise a pre-operative image and wherein the second medical image may comprise an intra-operative image. Intra-operative images are typically where brain-shift can be seen compared to pre-operative images.

In some embodiments, the computer-implemented method may further comprise applying the determined dense deformation field to the first medical image to generate a deformed first medical image. This may facilitate an effective and/or efficient prediction of registration between the two medical images of a subject's brain, such that, for example, adjustments of operative trajectory planning can be supported.

In some embodiments, obtaining a model-based segmentation of a first medical image of a subject's brain may comprise performing a model-based segmentation on the first medical image to identify at least one anatomical structure in the first medical image. This may facilitate the method being more self-contained such that the model-based segmentation of the first medical image need not be externally obtained.

In some embodiments, the dense deformation field may comprise a smooth, low-frequency motion field. This has been found to be a particularly beneficial form of dense deformation field for simulating brain-shift.

In some embodiments, the first and second medical images may comprise medical images of the same modality. The proposed method may still provide use for predicting a registration between two medical images of the same modality.

In some embodiments, the model-based segmentation of the first medical image may be based on contrast in the first medical image. This may provide an effective and/or efficient method of segmentation.

In some embodiments, performing a model-based segmentation on the first medical image may comprise using a machine-learning model trained to perform the model-based segmentation. This may provide an effective and/or efficient method of segmentation.

In some embodiments, the at least one anatomical structure in the second medical image may comprise at least a portion of the subject's brain.

In some embodiments, the at least one anatomical structure in the second medical image may comprise the same at least one anatomical structure as in the first medical image.

According to another aspect of the invention, there is provided a computer-implemented method for synthesizing a medical image of a subject's brain, the method comprising: obtaining a first medical image of a subject's brain; obtaining a model-based segmentation of the first medical image, wherein the segmentation identifies at least one anatomical structure in the first medical image; determining a dense deformation field for the first medical image based on the at least one anatomical structure in the first medical image; and applying the dense deformation field to the first medical image to generate a second medical image of the subject's brain in which the subject's brain is non-linearly deformed compared to the subject's brain in the first medical image.

In some embodiments, the at least one anatomical structure in the first medical image may comprise at least a portion of the subject's brain. This may ensure the determination of a more effective dense deformation field for synthesizing a brain-shifted medical image.

According to another aspect of the invention, there is provided a computer program comprising code means for implementing the method of any herein disclosed method when said program is run on a processing system.

According to another aspect of the invention, there is provided a processing system for predicting a registration between two medical images of a subject's brain. The processing system comprising an input interface configured to: obtain a first medical image of a subject's brain; obtain a model-based segmentation of the first medical image, wherein the segmentation identifies at least one anatomical structure in the first medical image; and obtain a second medical image of a subject's brain in which the subject's brain is non-linearly deformed compared to the subject's brain in the first medical image; and a processing unit configured to: determine a dense deformation field from the first medical image to the second medical image based on the at least one anatomical structure in the first medical image, the first medical image, and the second medical image.

Thus, there may be proposed concepts for predicting a registration between two medical images of a subject's brain, and this may be done based on obtaining first and second medical images of a subject's brain as well as a model-based segmentation of the first medical image.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified flow diagram of a computer-implemented method for predicting a registration between two medical images of a subject's brain according to a proposed embodiment;
Fig. 2 is a flow diagram of a computer-implemented method for predicting a registration between two medical images of a subject's brain according to a proposed embodiment;
Figs. 3A and 3B are diagrams for helping to explain the concept of brain-shift;
Fig. 4 is a flow diagram of a computer-implemented method for predicting a registration between two medical images of a subject's brain according to a proposed embodiment;
Fig. 5 is a flow diagram of a computer-implemented method for synthesizing a medical image of a subject's brain according to a proposed embodiment;
Fig. 6 is a simplified block diagram of a system for predicting a registration between two medical images of a subject's brain according to a proposed embodiment; and
Fig. 7 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to predicting a registration between two medical images of a subject's brain. According to proposed concepts, a number of possible solutions may be implemented separately or jointly. That is, although these possible solutions may be described below separately, two or more of these possible solutions may be implemented in one combination or another.

Proposed concepts thus aim to provide schemes, solutions, concept, designs, methods and systems pertaining to predicting a registration between two medical images of a subject's brain. In particular, embodiments aim to provide a method for predicting a registration between two medical images of a subject's brain. This can be achieved by obtaining a segmentation of a first medical image to identify an anatomical structure and then, based on this, determining a dense deformation field from the first medical image to the second medical image.

In other words, it is proposed that by determining a dense deformation field between a first medical image of a subject's brain and a second medical image in which a subject's brain is non-linearly deformed compared to the brain in the first medical image (i.e., has undergone brain-shift), a registration between the two images can essentially be predicted. The dense deformation field can be determined based on an anatomical structure identified in the first medical image (via a model-based segmentation) as well as the second medical image, such that the dense deformation field would essentially deform the anatomical structure in the first medical image to match the second medical image (e.g., the same anatomical structure in the second medical image).

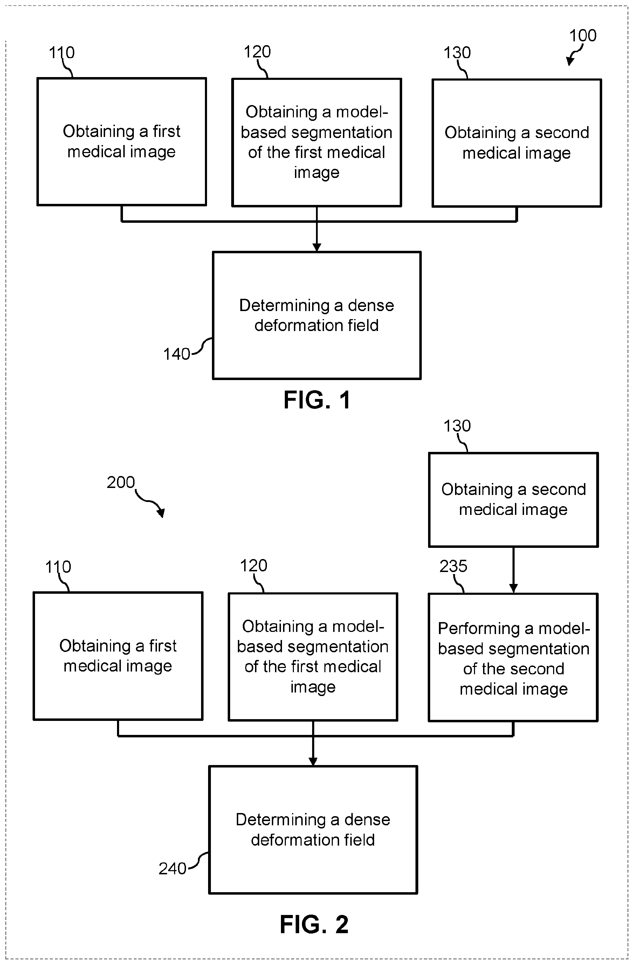

Referring now to Fig. 1, there is depicted a simplified flow diagram of a computer-implemented method 100 for predicting a registration between two medical images of a subject's brain according to a proposed embodiment.

The method 100 begins with the step 110 of obtaining a first medical image of a subject's brain. This can be understood as a medical image including a representation of at least a portion of a subject's brain. Obtaining can comprise capturing, retrieving from a memory/datastore, and/or retrieving from an external system.

Step 120 comprises obtaining a model-based segmentation of the first medical image, wherein the segmentation identifies at least one anatomical structure in the first medical image. A model-based segmentation of a medical image refers to the process of using predefined mathematical or computational models to identify and delineate specific structures or regions of interest within the image, enabling automated extraction of anatomical or pathological information. This approach utilizes prior knowledge about the expected appearance and characteristics of the structures, enhancing the accuracy and efficiency of image analysis in medical applications. An anatomical structure is a distinct and identifiable part of a subject's body, such as an organ (e.g., brain), tissues, or a bone (e.g., skull).

For example, the model-based segmentation of the first medical image can comprise anatomical information generated based on the first medical image, e.g., for a neurosurgical intervention. This information can thus include, for example, at least one anatomical structure from a model-based segmentation of cortical structures and/or nuclei.

In this embodiment, the at least one anatomical structure in the first medical image comprises at least a portion of the subject's brain. This ensures the determination of a more effective dense deformation field for compensation of brain-shift. This feature is not essential, however, and in other embodiments, for instance, the at least one anatomical structure can comprise at least a portion of the subject's skull - in this case, the dense deformation field can be based on this anatomical structure in the sense that it will ensure that skull is not deformed.

Step 130 comprises obtaining a second medical image of a subject's brain in which the subject's brain is non-linearly deformed compared to the subject's brain in the first medical image, e.g., has undergone brain-shift. Brain-shift refers to the dynamic changes in the position, shape, and/or deformation of brain tissue during neurosurgical procedures, often caused by factors such as gravity, cerebrospinal fluid dynamics, and tissue manipulation, and can be described as a non-linear deformation of the brain. Non-linear deformation refers to the distortion or alteration of a structure in a non-linear or non-uniform manner, meaning that the changes in shape or position are not proportional across the entire structure.

In this embodiment, the first medical image comprises a pre-operative magnetic resonance image and the second medical image comprises an intra-operative computed tomography or a cone beam computed tomography image. These are typical pairs of pre-operative and intra-operative medical image during neurosurgery, for example. Intra-operative images are typically where brain-shift can be seen compared to pre-operative images. In other embodiments, however, the first and second medical images can comprise medical images of any suitable modality, as would be understood by the skilled person, and are not limited to pre- or intra-operative images respectively. For instance, in some embodiments, both the first and second medical images can be intra-operative computed tomography images. For example, in some embodiments, the first and second medical images can comprise medical images of the same modality. The proposed method can still provide use for predicting a registration between two medical images of the same modality.

In some embodiments, the method 100 can further comprise actually capturing the second medical image during a neurological surgical procedure which causes non-linear deformation of the subject's brain.

Step 140 comprises determining a dense deformation field from the first medical image to the second medical image based on the at least one anatomical structure in the first medical image, the first medical image, and the second medical image. A dense deformation field is a mathematical representation used in medical imaging and biomechanics to describe the spatial transformations applied to each voxel or point within a three-dimensional space. It provides a detailed mapping of how each element in the original structure is displaced or deformed, offering a high-resolution depiction of the complex and often non-linear changes that occur during processes such as morphological variations or anatomical deformations. A dense deformation field from the first medical image to the second medical image can also be understood as a dense deformation field suitable for deforming the first medical image to better match the second medical image, i.e., such that at least one of the at least one anatomical structures in the first medical image better matches (the same at least one anatomical structure, e.g., a portion of the subject's brain) in the second medical image.

In some embodiments, the dense deformation field can comprise a smooth, low-frequency motion field. This has been found to be a beneficial form of dense deformation field for simulating brain-shift when the brain-shift is not too large. In other embodiments, however, the dense deformation field can comprise any suitable field, as would be understood by the skilled person.

For example, in some cases of brain shift, the areas of cerebrospinal fluid between the brain and the skull can expand quite significantly. As the skull will not change its shape, the deformation field near the inner surface of the skull would not be a smooth, low-frequency field. Practically, e.g., when using b-splines for this purpose, the deformation can be accurately achieved using a high number of b-spline control points.

For example, sets of corresponding vertices in the first and second medical images can form the basis of the dense deformation field, either by means of thin-plate splines or b-splines, as would be understood by the skilled person. This deformation field can then be applied, for example, to locations / anatomical structures obtained from the first medical image. In another example, the dense deformation field can be optimized by taking into account average predetermined elastic brain tissue properties, e.g., by a finite elements mode with boundary conditions defined by point correspondences. In yet another example, surface meshes could be used which adapt by means of AI-based boundary detector functions.

For example, the surface meshes can be used as the basis of the model-based segmentation algorithm framework proposed herein. The meshes can consist of connected triangles, of which vertices form their corners. For the brain, several anatomical structure surfaces are considered, including the skull, hemispheres, ventricles, and a couple of sub-cortical regions. In a training phase, given a set of annotated images (where surfaces have been manually edited to match their correct position) each triangle learns the contrast features matching its position, either with AI or with statistical contrast analysis. Adaptation of a trained model to a new unseen image essentially comes down to iteratively moving triangles to the contrast best matching its learned features (external energy) while penalizing deviations from a "normal" shape (internal energy). After adaptation, anatomical structures covered by the model are segmented. If this is done on at least two medical images, a deformation field from one image to another can be optimized such that vertices of one adapted mesh are transformed to corresponding ones of the other mesh. Consequently, the deformation field can be driven by corresponding anatomical surfaces. The meshes can therefore act as a linking piece between segmentation (as a pre-processing step) and anatomy-driven registration (by utilizing corresponding vertex positions).

Referring now to Fig. 2, there is depicted a flow diagram of a computer-implemented method 200 for predicting a registration between two medical images of a subject's brain according to a proposed embodiment. Steps 110, 120, and 130 are substantially the same as have been described in relation to the method 100 in Fig. 1.

Step 235 comprises performing a model-based segmentation on the second medical image to identify at least one anatomical structure in the second medical image. Preferably, the at least one anatomical structure in the second medical image comprises the same at least one anatomical structure as in the first medical image. For example, in some embodiments, the at least one anatomical structure in the second medical image can comprise at least a portion of the subject's brain.

Step 240 is substantially the same as step 140 described in relation to method 100 of Fig. 1, however, determining the dense deformation field is further based on the at least one anatomical structure in the second medical image. This may facilitate a more effective and/or efficient determination of the dense deformation field, e.g., for deforming the first medical image such that the at least one anatomical structure matches the at least one anatomical structure in the second medical image.

In fact, in this embodiment, the determined dense deformation field is for matching a surface of the at least one anatomical structure in the first medical image to a surface of the at least one anatomical structure in the second medical image. In this way, a registration between the two medical images is more effectively and/or efficiently predicted.

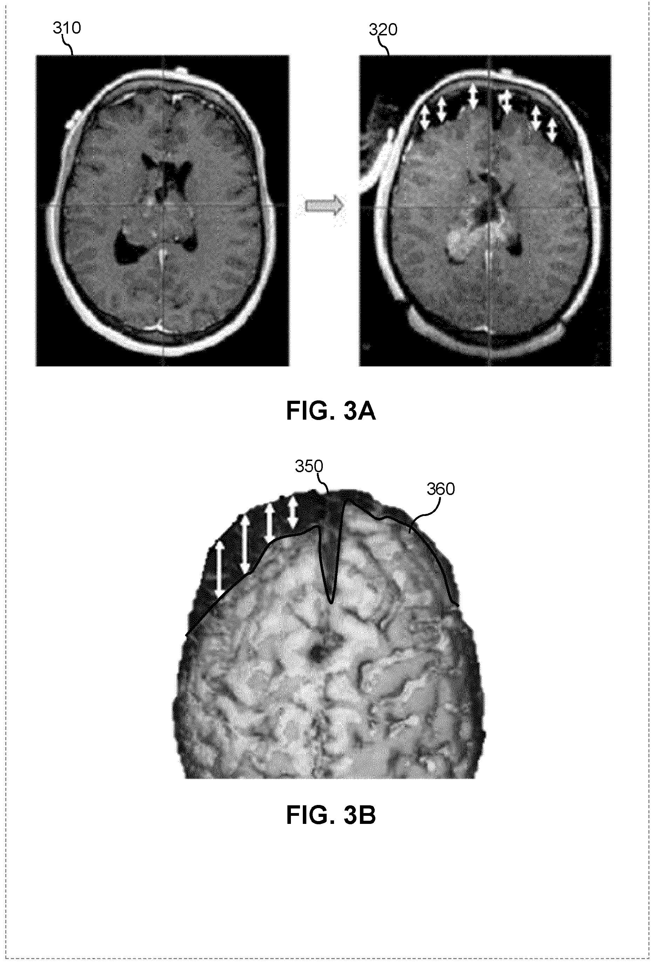

Referring now to Fig. 3A, there is depicted a diagram for helping to explain the concept of brain-shift. For example, the first medical image 310 depicts a subject's brain before a neurosurgical procedure. The second medical image 320 depicts the same subject's brain during a neurosurgical procedure, wherein the brain has undergone brain-shift, i.e., a non-linear deformation, as can clearly be seen by the way the brain has receded from the skull by different amounts along its surface.

Referring now to Fig. 3B, there is depicted a comparison of the different shapes of a subject's brain, before and during a neurosurgical procedure. For instance, the lighter portion of the brain 360 indicates the shape of the brain intra-operation, i.e., during an operation. The darker portion brain 350 indicates the shape of the brain pre-operation, and thus the non-linear deformation can be clearly seen as indicated by the white arrows.

What the present invention aims to do therefore is to determine a dense deformation field, for example, which would deform the subject's brain as shown in medical image 310 or as indicated by shape 350 to better fit/match the subject's brain as shown in medical image 320 or as indicated by shape 360, respectively. The same concept can also be used to synthesize medical images in which a subject's brain has undergone brain-shift. For example, a dense deformation field could be used to generate the second medical image 320 from the first medical image 310.

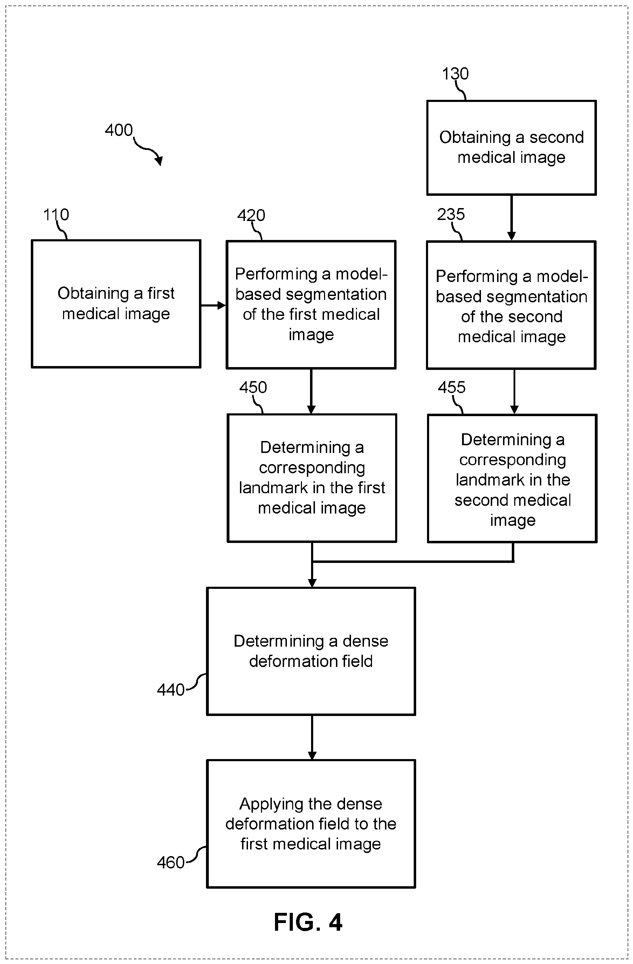

Referring now to Fig. 4, there is depicted a flow diagram of a computer-implemented method 400 for predicting a registration between two medical images of a subject's brain according to a proposed embodiment. Steps 110 and 130 are substantially the same as have been described in relation to method 100 of Fig. 1. Step 235 is substantially the same as has been described in relation to method 200 of Fig. 2.

Step 420 comprises performing a model-based segmentation on the first medical image to identify at least one anatomical structure in the first medical image. This facilitates the method 400 being more self-contained such that the model-based segmentation of the first medical image need not be externally obtained.

For example, in some embodiments, the model-based segmentation of the first medical image can be based on contrast in the first medical image. This can provide an effective and/or efficient method of segmentation, however, as the skilled person would understand, any suitable form of model-based segmentation can be used. For example, in some embodiments, performing a model-based segmentation on the first medical image can comprise using a machine-learning model trained to perform the model-based segmentation. This can provide an effective and/or efficient method of segmentation.

For example, in order to adapt pre-operative information to intra-operative CBCT/CT images, a software for model-based segmentation of brain structures can be used that is trained to segment both MR images and CBCT/CT images by means of sets of annotated training scans. Due to the nature of image contrast of CBCT/CT images, segmentation can be beneficially limited to structures which provide sufficient contrast, such as hemispheres or ventricles, in which contrast is available due to the surrounding cortical spinal fluid or the skull, or, if the CBCT/CT scan parameters have been chosen accordingly, the putamen or thalamus.

Steps 450 and 455 comprise determining at least one corresponding landmark in each of the first and second medical images respectively based on the determined at least one anatomical structure in each of the first and second medical images respectively.

Step 440 thus comprises determining a dense deformation field based on the determined at least one corresponding landmark in the first and second medical images respectively. The use of landmarks in the anatomical structures in the first and second medical images respectively provides an effective and/or efficient way to determine a dense deformation field.

In this embodiment, both the first medical image and the second medical image each include at least a portion of the subject's skull, and wherein the determined dense deformation field is for matching the position of the at least one corresponding landmark relative to the subject's skull in the first medical image to the position of the at least one corresponding landmark relative to the subject's skull in the second medical image. This facilitates an effective and/or efficient way to determine a dense deformation field.

Step 460 comprises applying the determined dense deformation field to the first medical image to generate a deformed first medical image. This facilitates an effective and/or efficient prediction of registration between the two medical images of a subject's brain, such that, for example, adjustments of operative trajectory planning can be supported.

For example, this invention essentially proposes to deform surfaces of anatomical structures or target points obtained from a pre-operative MR image to an intra-operative CBCT/CT image by means of a set of corresponding guiding landmarks that have been automatically localized in the MR and CBCT/CT images. This way, results from pre-operative MR images can be warped to better match intra-operative CBCT/CT images, thus supporting adjustments of trajectory planning.

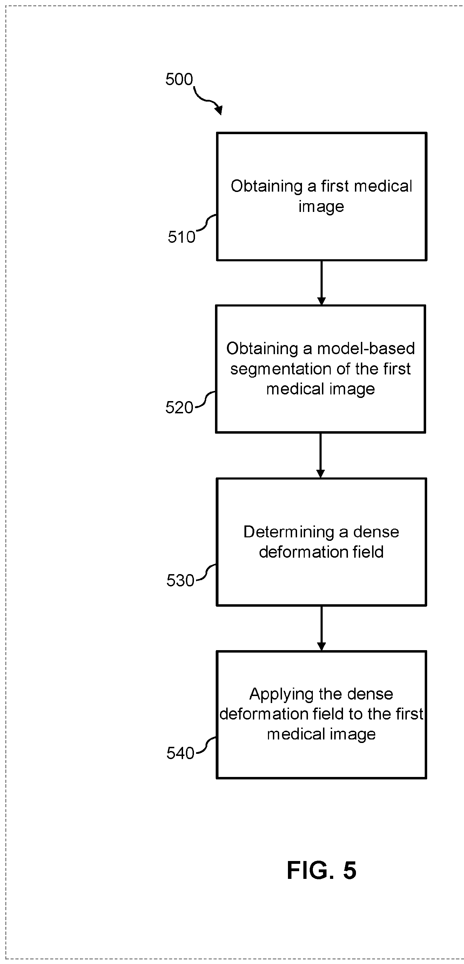

Referring now to Fig. 5, there is depicted a flow diagram of a computer-implemented method 500 for synthesizing a medical image of a subject's brain according to a proposed embodiment.

The method 500 begins with step 510 of obtaining a first medical image of a subject's brain. Step 520 comprises obtaining a model-based segmentation of the first medical image, wherein the segmentation identifies at least one anatomical structure in the first medical image. Step 530 comprises determining a dense deformation field for the first medical image based on the at least one anatomical structure in the first medical image. This can also be understood as determining a dense deformation field for the first medical image responsive to the at least one anatomical structure in the first medical image.

Step 540 comprises applying the dense deformation field to the first medical image to generate a second medical image of the subject's brain in which the subject's brain is non-linearly deformed compared to the subject's brain in the first medical image. In this way, an image in which a subject's brain has undergone brain-shift can be synthesized. Since datasets with brain-shift are rare, it is useful to be able to simulate/synthesize pairs of medical images in which a subject's brain is non-linearly deformed compared to the subject's brain in the first medical image (e.g., a real medical image of the subject's brain or a simulated/synthesized medical image of the subject's brain). These can then be used, for example, to train machine-learning models in matters related to brain-shift.

In other words, datasets with brain shift can be simulated with segmentations of pre-operative scans if both the skull and hemispheres are segmented. In this case, tissue inside the hemispheres might be deformed by a smooth, low-frequency motion field. The residual space between the skull and the hemispheres in the synthesized medical image with brain shift can then be filled with a contrast matching the extracortical cerebrospinal fluid.

In this embodiment, the at least one anatomical structure in the first medical image comprises at least a portion of the subject's brain. This ensures the determination of a more effective dense deformation field for synthesizing a brain-shifted medical image. This feature is not essential, however, and in other embodiments, the at least one anatomical structure in the first medical image can comprise any other suitable anatomical structure.

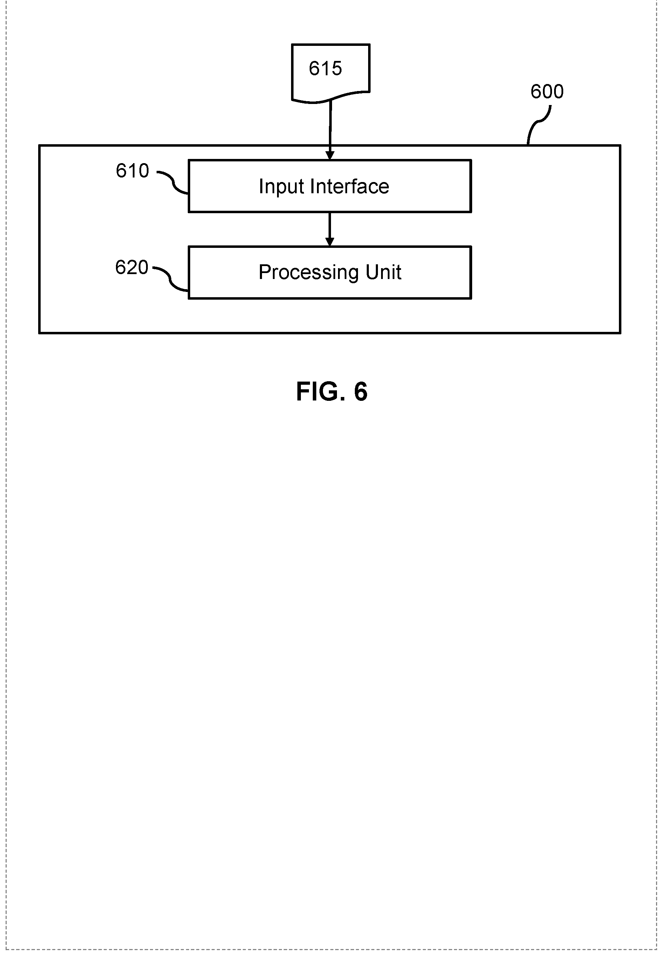

Referring now to Fig. 6, there is depicted a processing system 600 for predicting a registration between two medical images of a subject's brain according to a proposed embodiment. The system 600 comprises an input interface 610 and a processing unit 620.

The processing system 600 is configured to predict a registration between two medical images of a subject's brain by processing inputs 615. The inputs 615 comprise a first medical image of a subject's brain, a model-based segmentation of the first medical image, wherein the segmentation identifies at least one anatomical structure in the first medical image, and a second medical image of a subject's brain in which the subject's brain is non-linearly deformed compared to the subject's brain in the first medical image. The input interface 610 obtains the inputs 615 and the processing unit 620 is then configured to determine a dense deformation field from the first medical image to the second medical image based on the at least one anatomical structure in the first medical image, the first medical image and the second medical image.

According to another aspect of the invention, there can also be provided a processing system for synthesizing a medical image of a subject's brain according to a proposed embodiment. This processing system comprises an input interface and a processing unit. The input interface is configured to obtain a first medical image of a subject's brain, and obtain a model-based segmentation of the first medical image, wherein the segmentation identifies at least one anatomical structure in the first medical image. The processing unit is then configured to determine a dense deformation field for the first medical image based on the at least one anatomical structure in the first medical image; and apply the dense deformation field to the first medical image to generate a second medical image of the subject's brain in which the subject's brain is non-linearly deformed compared to the subject's brain in the first medical image. For example, this processing system can be the same processing system 600 as described above, or alternatively, it can be a separate processing system.

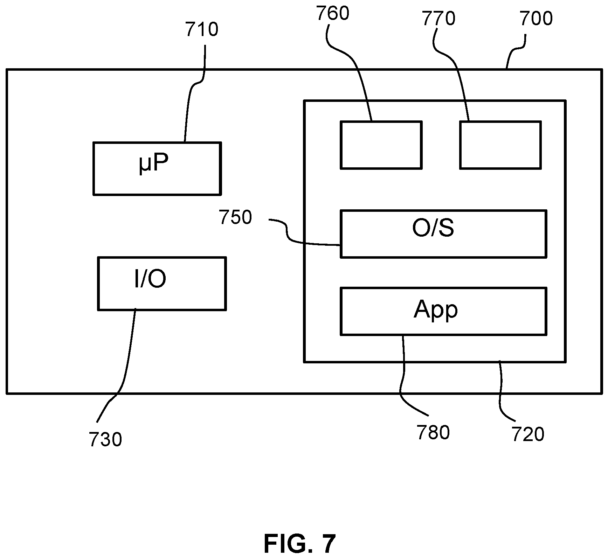

Fig. 7 illustrates an example of a computer 700 within which one or more parts of an embodiment may be employed. Various operations discussed above may utilize the capabilities of the computer 700. In this regard, it is to be understood that system functional blocks can run on a single computer or may be distributed over several computers and locations (e.g. connected via internet).

The computer 700 includes, but is not limited to, PCs, workstations, laptops, PDAs, palm devices, servers, storages, and the like. Generally, in terms of hardware architecture, the computer 700 may include one or more processors 710, memory 720 and one or more I/O devices 730 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 710 is a hardware device for executing software that can be stored in the memory 720. The processor 710 can be virtually any custom made or commercially available processor, a central processing unit (CPU), a digital signal processor (DSP), or an auxiliary processor among several processors associated with the computer 700, and the processor 710 may be a semiconductor based microprocessor (in the form of a microchip) or a microprocessor.

The memory 720 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 720 may incorporate electronic, magnetic, optical, and/or other types of storage media. Note that the memory 720 can have a distributed architecture, where various components are situated remote from one another, but can be accessed by the processor 710.

The software in the memory 720 may include one or more separate programs, each of which comprises an ordered listing of executable instructions for implementing logical functions. The software in the memory 720 includes a suitable operating system (O/S) 750, compiler 760, source code 770, and one or more applications 780 in accordance with exemplary embodiments. As illustrated, the application 780 comprises numerous functional components for implementing the features and operations of the exemplary embodiments. The application 780 of the computer 700 may represent various applications, computational units, logic, functional units, processes, operations, virtual entities, and/or modules in accordance with exemplary embodiments, but the application 780 is not meant to be a limitation.

The operating system 750 controls the execution of other computer programs, and provides scheduling, input-output control, file and data management, memory management, and communication control and related services. It is contemplated by the inventors that the application 780 for implementing exemplary embodiments may be applicable on all commercially available operating systems.

Application 780 may be a source program, executable program (object code), script, or any other entity comprising a set of instructions to be performed. When a source program, then the program is usually translated via a compiler (such as the compiler 760), assembler, interpreter, or the like, which may or may not be included within the memory 720, so as to operate properly in connection with the O/S 750. Furthermore, the application 780 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 730 may include input devices such as, for example but not limited to, a mouse, keyboard, scanner, microphone, camera, etc. Furthermore, the I/O devices 730 may also include output devices, for example but not limited to a printer, display, etc. Finally, the I/O devices 730 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 730 also include components for communicating over various networks, such as the Internet or intranet.

If the computer 700 is a PC, workstation, intelligent device or the like, the software in the memory 720 may further include a basic input output system (BIOS) (omitted for simplicity). The BIOS is a set of essential software routines that initialize and test hardware at start-up, start the O/S 750, and support the transfer of data among the hardware devices. The BIOS is stored in some type of read-only-memory, such as ROM, PROM, EPROM, EEPROM or the like, so that the BIOS can be executed when the computer 800 is activated.

When the computer 700 is in operation, the processor 710 is configured to execute software stored within the memory 720, to communicate data to and from the memory 720, and to generally control operations of the computer 700 pursuant to the software. The application 780 and the O/S 750 are read, in whole or in part, by the processor 710, perhaps buffered within the processor 710, and then executed.

When the application 780 is implemented in software it should be noted that the application 780 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 780 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-2 and 4-5, and the system of Fig. 6, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 7 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A computer-implemented method (100) for predicting a registration between two medical images of a subject's brain, the method comprising:
obtaining a first medical image (110) of a subject's brain;
obtaining a model-based segmentation of the first medical image (120), wherein the segmentation identifies at least one anatomical structure in the first medical image;
obtaining a second medical image (130) of a subject's brain in which the subject's brain is non-linearly deformed compared to the subject's brain in the first medical image; and
determining a dense deformation field (140) from the first medical image to the second medical image based on the at least one anatomical structure in the first medical image, the first medical image, and the second medical image.

2. The computer-implemented method of claim 1, wherein the method further comprises:
performing a model-based segmentation (235) on the second medical image to identify at least one anatomical structure in the second medical image; and
wherein determining the dense deformation field (240) is further based on the at least one anatomical structure in the second medical image.

3. The computer-implemented method of claim 2, wherein the determined dense deformation field is for matching a surface of the at least one anatomical structure in the first medical image to a surface of the at least one anatomical structure in the second medical image.

4. The computer-implemented method of claim 2 or 3, the method further comprising:
determining at least one corresponding landmark in each of the first and second medical images (450, 455) respectively based on the determined at least one anatomical structure in each of the first and second medical images respectively; and
wherein determining a dense deformation field is based on the determined at least one corresponding landmark in the first and second medical images respectively.

5. The computer-implemented method of claim 4, wherein both the first medical image and the second medical image each include at least a portion of the subject's skull, and wherein the determined dense deformation field is for matching the position of the at least one corresponding landmark relative to the subject's skull in the first medical image to the position of the at least one corresponding landmark relative to the subject's skull in the second medical image.

6. The computer-implemented method of any of claims 1 to 5, wherein the at least one anatomical structure in the first medical image comprises at least a portion of the subject's brain.

7. The computer-implemented method of any of claims 1 to 6, further comprising capturing the second medical image during a neurological surgical procedure which causes non-linear deformation of the subject's brain.

8. The computer-implemented method of any claims 1 to 7, wherein the first medical image comprises a magnetic resonance image and the second medical image comprises a computed tomography or a cone beam computed tomography image.

9. The computer-implemented method of any of claims 1 to 8, wherein the first medical image comprises a pre-operative image and wherein the second medical image comprises an intra-operative image.

10. The computer-implemented method of any of claims 1 to 9, wherein the method further comprises applying the determined dense deformation field (460) to the first medical image to generate a deformed first medical image.

11. The computer-implemented method of any of claims 1 to 10, wherein obtaining a model-based segmentation of a first medical image of a subject's brain comprises:
performing a model-based segmentation (420) on the first medical image to identify at least one anatomical structure in the first medical image.

12. A computer-implemented method (500) for synthesizing a medical image of a subject's brain, the method comprising:
obtaining a first medical image (510) of a subject's brain;
obtaining a model-based segmentation (520) of the first medical image, wherein the segmentation identifies at least one anatomical structure in the first medical image;
determining a dense deformation field (530) for the first medical image based on the at least one anatomical structure in the first medical image; and
applying the dense deformation field (540) to the first medical image to generate a second medical image of the subject's brain in which the subject's brain is non-linearly deformed compared to the subject's brain in the first medical image.

13. The computer-implemented method of claim 12, wherein the at least one anatomical structure in the first medical image comprises at least a portion of the subject's brain.

14. A computer program comprising code means for implementing the method of any of claims 1 to 13 when said program is run on a processing system.

15. A processing system (600) for predicting a registration between two medical images of a subject's brain, the processing system comprising:
an input interface (610) configured to:
obtain a first medical image of a subject's brain;
obtain a model-based segmentation of the first medical image, wherein the segmentation identifies at least one anatomical structure in the first medical image; and
obtain a second medical image of a subject's brain in which the subject's brain is non-linearly deformed compared to the subject's brain in the first medical image; and
a processing unit (620) configured to:
determine a dense deformation field from the first medical image to the second medical image based on the at least one anatomical structure in the first medical image, the first medical image and the second medical image.
